# EUROPEAN PATENT SPECIFICATION

(11) **EP 3 506 807 B1**
(45) Date of publication and mention of the grant of the patent: **24.06.2020**
(21) Application number: 17751366.0
(22) Date of filing: 04.08.2017
(51) Int. Cl.: A47J 27/04, A47J 27/00, A47J 27/086

(54) **METHOD FOR COOKING RICE WITH AN ELECTRIC COOKER**
VERFAHREN ZUM KOCHEN VON REIS MIT EINER ELEKTRISCHEN GARVORRICHTUNG
PROCÉDÉ DE CUISSON DU RIZ AVEC UN CUISEUR ÉLECTRIQUE

(30) Priority: 30.08.2016 CN 201610783009
(43) Date of publication of application: 10.07.2019
(73) Proprietor: SEB S.A., 69130 Ecully (FR)
(72) Inventor: MA, Chao, Hangzhou Zhejiang 310051 (CN)
(74) Representative: Bourrières, Patrice
(86) International application number: PCT/EP2017/069867
(87) International publication number: WO 2018/041536

(56) References cited:
- JP-A- 2016 087 123
- US-A1- 2007 190 221

## Description

The present invention relates to the field of cooking equipment and in particular a method for cooking rice using an electric cooker.

To cook rice with low Glycemic index, the electric rice cookers of the prior art (see document US 2007/0190221 A1) are equipped with a water tank, and water is pumped from the water tank into the internal pot of the rice cooker. The base of the internal pot is equipped with a water outlet. During rice washing, water is sprayed downwards and towards the interior of the internal pot to wash the rice contained within the pot. The water then flows out from the water outlet at the base of the internal pot into the water drain at the bottom of the pot. A portion of the starch and sugar content of the rice is washed away by the water. After rice washing and soaking are completed, the water outlet at the base of the internal pot will be closed. Thereafter, a specific amount of water will be added into the internal pot to cook the rice.

The electric rice cookers of the prior art must be equipped with a water tank, water outlet, water drain and other structures, which makes them rather complex and difficult to seal and wash.

The main object of the present invention is to provide a method of cooking rice using an electric cooker, which is structurally simple and yet able to produce cooked rice with low glycemic index.

To achieve the above object, the present invention provides a method for cooking rice using an electric cooker, which comprises an internal pot, a heating means, a steamer housed within said internal pot, and a water circulation system that is connected with the internal pot and steamer, and the heating means heats up the internal pot. The method comprises the following steps: the rice washing step in which water is drawn from the internal pot into the steamer using the water circulation system to wash the rice contained within the steamer, and thereafter, the water is directed into the internal pot; and the rice steaming step in which the heating means heats up the internal pot.

Further, a preheating step is performed between said rice washing and rice steaming steps, and said preheating step comprises heating the water in the internal pot to a first preset temperature T1 and maintaining this up to a first preset time t1, after which, the operation of the water circulation system is stopped.

Further, during said rice washing step, rice washing is continued up to a second preset time t2, whereby said second preset time t2 is at least 180s and at most 2400s; during the preheating step, the first preset temperature T1 is at least 10°C and at most 100°C, and the first preset time t1 is at least 20s and at most 600s.

Further, the second preset time t2 is at least 300s and at most 1800s, the first preset temperature T1 is at least 50°C and at most 95°C, and the first preset time t1 is at least 30s and at most 400s.

Further, a preheating step is carried out before rice washing, which comprises heating the water in the internal pot to a second preset temperature T2 and then activating the water circulation system of the rice washing step and maintaining this up to the second preset time t2.

Further, when the rice washing step is activated, the heating means starts heating up the water contained within the internal pot at the same time, and when temperature of the water reaches a second preset temperature T2, the rice washing step continues circulating up to a second preset time t2.

Further, the second preset temperature T2 is at least 30°C and at most 95°C, and the second preset time t2 is at least 180s and at most 2400s.

Further, the second preset temperature T2 is at least 60°C and at most 80°C, and the second preset time t2 is at least 300s and at most 1800s.

Further, the entire rice steaming step is divided into the preliminary rice steaming stage and the final rice steaming stage according to sequence in time, and in the preliminary rice steaming stage, the heating means heats up the internal pot up to a third preset time t3, after which the heating means stops operating and rice steaming is continued up to a fourth preset time t4, and this is repeated N1 times; in the final rice steaming stage, the heating means heats up the internal pot up to a fifth preset time t5, after which the heating means stops operating and rice steaming is continued up to a sixth preset time t6, and this is repeated N2 times.

Further, the third preset time t3 is at least 3 seconds and at most 130 seconds, the fourth preset time t4 is at least 3 seconds and at most 130 seconds, the fifth preset time t5 is at least 3 seconds and at most 130 seconds, and the sixth preset time t6 is at least 3 seconds and at most 130 seconds; N1 is at least 2 and at most 100, and N2 is at least 2 and at most 100.

Further, N1 is at least 4 and at most 80, and N2 is at least 4 and at most 80.

An electric cooker in which the technical solution of the present invention is applied comprises an internal pot, a heating means, a steamer housed within the internal pot, and a water circulation system that is connected with the internal pot and steamer, and the heating means heats up the internal pot. The method for controlling the electric cooker comprises the following steps: the rice washing step in which water is drawn from the internal pot into the steamer using the water circulation system to wash the rice contained within the steamer, and thereafter, the water is directed into the internal pot; and the rice steaming step in which the heating means heats up the internal pot. Hence, the electric cooker of the present invention, which does not require a water outlet, water drain or other related structures, can have a simple structure. By separating the cooking and steaming processes using the steamer, the starch and sugar contents of the rice are reduced when they are washed from the rice and enter the rice soup in the internal pot. This lowers the sugar content of the cooked rice and produces low-glycemic index rice. Further, water is recycled and reused by producing steam to be used for steaming the rice from the water that was used to wash the rice.

The drawings constitute a portion of the Description for further understanding of the present invention. These drawings illustrate the embodiments of the present invention and explain the principle of the present invention together with the Description. They are not intended to limit the scope of the invention. In the drawings:
FIG. 1 is a schematic view of the first specific embodiment of an electric cooker of the present invention;
FIG. 2 illustrates the relative positions of the steamer and the internal pot from FIG. 1, before the internal pot is filled with water;
FIG. 3 illustrates the relative positions of the internal pot, steamer, flow directing conduit and suction pump from FIG. 1, when rice has not come into contact with water;
FIG. 4 illustrates the relative positions of the internal pot, steamer, flow directing conduit and suction pump from FIG. 1 during the rice washing step;
FIG. 5 is a schematic view of the second specific embodiment of an electric cooker of the present invention;
FIG. 6 illustrates the relative positions of the internal pot, steamer and flow directing conduit in FIG. 5 before the rice washing step and before rice has come into contact with water;
FIG. 7 illustrates the relative positions of the internal pot, steamer and flow directing conduit in FIG. 5 during the rice washing step;
FIG. 8 is a flowchart depicting the first method of cooking rice with an electric cooker of the present invention; and
FIG. 9 is a flowchart depicting the second method of cooking rice with an electric cooker of the present invention.

Wherein the above-mentioned figures comprise following reference numbers: 10. Internal pot; 20. Steamer; 21. Water drainage hole; 22. Bearing cavity; 23. Protruding part; 30. Flow directing conduit; 31. Steamer suction tube; 32. Water discharge tube; 40. Suction pump; 50. External housing; 60. Top cover; 70. First sealing ring; 80. Heating means.

It should be noted that the particular features of any specific embodiment may be combined in any suitable manner with one or more other specific embodiments. Representative embodiments of the present invention are explained hereinafter with reference to the accompanying drawings.

It is to be understood that the following detailed description are exemplary and explanatory, and are intended to provide further explanation of the invention. Unless otherwise defined, all terms (including technical and scientific terms) used herein have the same meaning as commonly understood by one of ordinary skill in the art to which this invention belongs.

In the present invention, terms indicating orientation or direction, such as "up, down, top or bottom" are not intended to be absolute terms unless the context requires or indicates otherwise. These terms will normally refer to orientations shown in the drawings. Similarly, to facilitate understanding and description, "internal" and "external" refer to a positioning with respect to the boundary of the part itself. The above terms are not intended to restrict the scope of this invention. The electric cooker and the method of cooking rice using an electric cooker of the present invention uses a simple structure to produce cooked rice with low glycemic index.

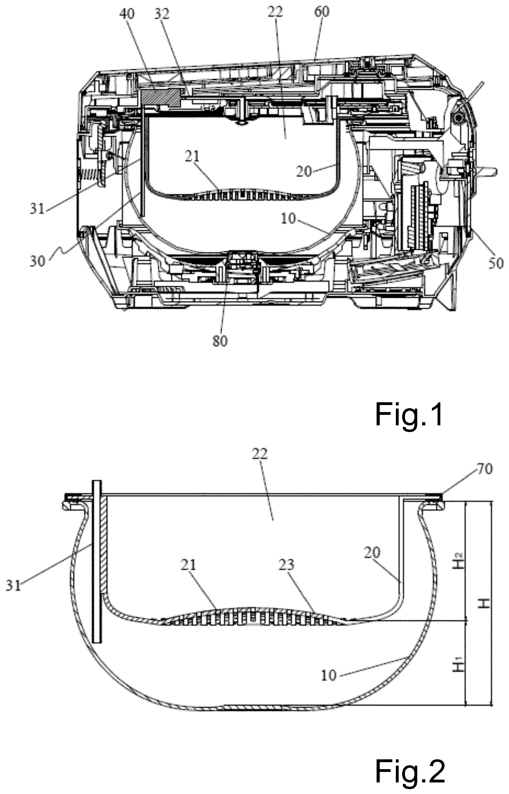

As shown in FIG. 1 to 4, the rice cooker of the first specific embodiment of the present invention comprises internal pot 10, heating means 80, a water circulation system connected to internal pot 10 and steamer 20, and a steamer 20 housed within internal pot 10. Heating means 80 heats up internal pot 10.

In this way, compared to the electric cookers of the prior art that requires a water tank, water outlet, drainage pipe, the electric cooker of the present invention is equipped with a water circulation system to circulate water between internal pot 10 and steamer 20, hence preventing wastage of water resources. As the electric cooker of the present invention is not equipped with a water tank or drainage pipe, the cooker is structurally simpler and of smaller size, and is hence easier to use and clean; furthermore, the electric cooker of the present invention does not have the problems associated with electric cookers of the prior art, such as ensuring proper sealing of the water outlet, difficulty in washing the internal pot, difficulty in placing the internal pot during usage, etc.

As shown in FIG. 1 to 4, in the first specific embodiment of the present invention, the bottom wall of steamer 20 has a protruding part 23 that protrudes towards the inside of steamer 20. Specifically, the bottom wall of steamer 20 protrudes upwards such that the bottom wall of steamer 20 is higher at the centre and lower at the peripheral. Thus, during rice steaming, the water rising in internal pot 10 can be prevented from coming into contact with the rice, and rice is cooked through steaming to produce rice of better taste.

Optionally, steamer 20 can be cylindrical, pyramidal, hexahedral or other shapes. As shown in FIG. 2, to ensure that the bubbling rice milk in internal pot 10 does not come into contact with the rice during the rice steaming process, the lowest point of the bottom wall of internal pot 10 is at a distance H1 from the lowest point of the bottom wall of steamer 20, and H1 is at least 0.1H and at most 0.8H, where H is the height of the internal pot 10, i.e. the distance between the bottom wall and mouth of internal pot 10.

As shown in FIG. 2, the distance between the lowest point of the bottom wall of steamer 20 and the mouth of internal pot 10 is H2. H2 is at least 0.1H and at most 0.8H, where H is the height of internal pot 10.

As shown in FIG. 1 to 4, steamer 20 has a water drainage hole 21 and bearing cavity 22. After rice washing, water flows into internal pot 10 via water drainage hole 21.

Specifically, water drainage hole 21 is a plurality of holes. Said plurality of water drainage holes 21 are located at the bottom wall of steamer 20.

Preferably, the plurality of water drainage holes 21 are all located on protruding part 23. Of course, in alternative embodiments not shown in the figures, the plurality of water drainage holes 21 can also be located on the side wall of steamer 20.

Optionally, to ensure that the rice in steamer 20 will not escape through water drainage holes 21, the cross-section of each water drainage hole 21 can be circular, elliptical, rectangular or polygonal.

When water drainage hole 21 takes the shape of an irregular polygon, the largest dimension of water drainage hole 21 is at least 0.5mm and at most 30mm.

Optionally, the largest dimension of the irregular polygonal water drainage hole 21 is at least 0.8mm and at most 20mm.

As shown in FIG. 1 to 4, the water circulation system comprises flow directing conduit 30 and suction pump 40 located on the flow directing conduit 30. In this embodiment of the electric cooker, suction pump 40 is used to push water from internal pot 10 smoothly into steamer 20 (i.e. bearing cavity 22) to wash the rice contained within steamer 20 and to let the rice to absorb water.

In this set-up, one end of flow directing conduit 30 is located within internal pot 10 but outside steamer 20, and the other end of flow directing conduit 30 extends into steamer 20.

Specifically, as shown in FIG. 2 to 4, flow directing conduit 30 comprises a steamer suction tube 31 and water discharge tube 32 that is connected to steamer suction tube 31.

To facilitate assembly, flow directing conduit 30 and steamer suction tube 31 can be integrated on steamer 20.

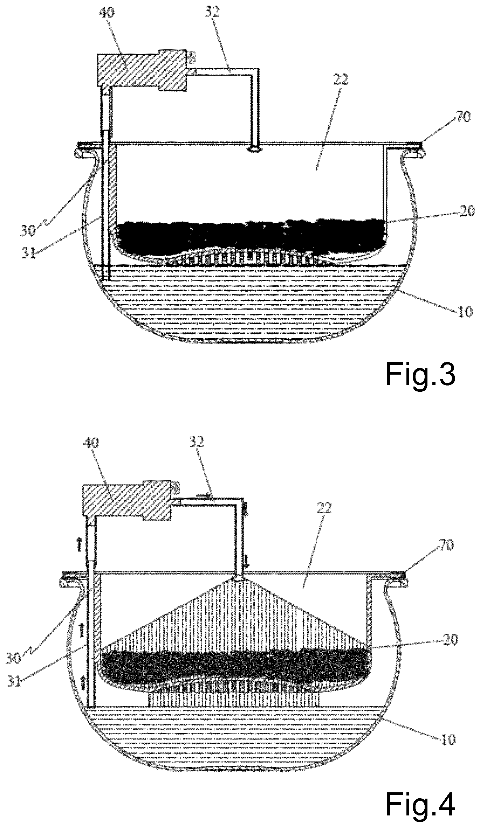

As shown in FIG. 3 and 4, the end of water discharge tube 32 that points towards steamer 20 is fitted with a nozzle, so as to spray water evenly on the rice contained within steamer 20. This ensures that all rice grains can absorb an adequate amount of water.

As shown in FIG. 1, the electric cooker further comprises external housing 50 and top cover 60, and internal pot 10 is positioned within external housing 50; top cover 60 is fitted on top of external housing 50. Water discharge tube 32 and suction pump 40 are fitted on top cover 60.
The electric cooker described above is an electric rice cooker, but can also be a microwave, electric slow cooker or electric pressure cooker.

Optionally, heating means 80 is a heating device selected from the group comprising a heating plate, heating tube, IH electromagnetic heating device and heating film.

It should be noted that before using the electric cooker of the present invention, rice must be added to bearing cavity 22 of steamer 20, and water must be added to internal pot 10.

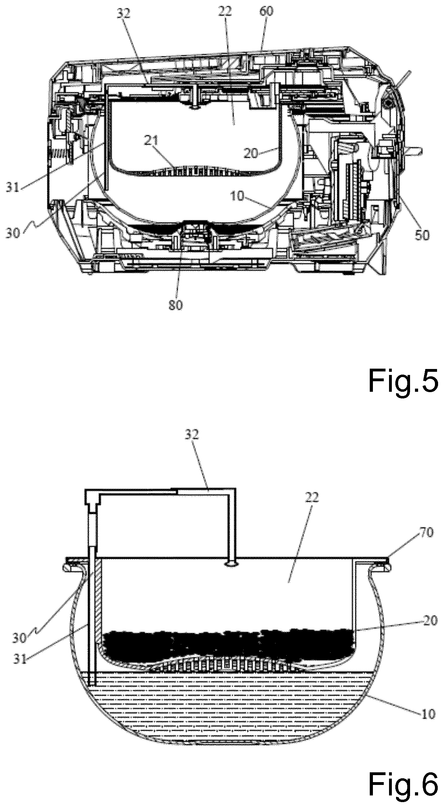

As shown in FIG. 5 to 7, in an electric cooker of another structure (i.e. the second specific embodiment), the water circulation system differs from the first specific embodiment in that no suction pump 40 is provided on flow directing conduit 30.

Furthermore, the top of steamer 20 is connected to the mouth of internal pot 10 in a sealed connection. Specifically, the top of steamer 20 is connected to the mouth of internal pot 10 in a connection sealed with first sealing ring 70. This effectively ensures that when pressure within the separating cavity between internal pot 10 and steamer 20 rises, steam can push water smoothly into steamer 20 through flow directing conduit 30, and steam is prevented from escaping through the top of steamer 20 and the mouth of internal pot 10.

It should be noted that to ensure that the steam can push water smoothly into steamer 20 through steamer suction tube 31 and water discharge tube 32 after the pressure in the separating cavity between internal pot 10 and steamer 20 rises, the internal diameter of steamer suction tube 31 should be at least 0.5mm and at most 20mm.

Further optionally, the internal diameter of steamer suction tube 31 is at least 1.5mm and at most 12mm.

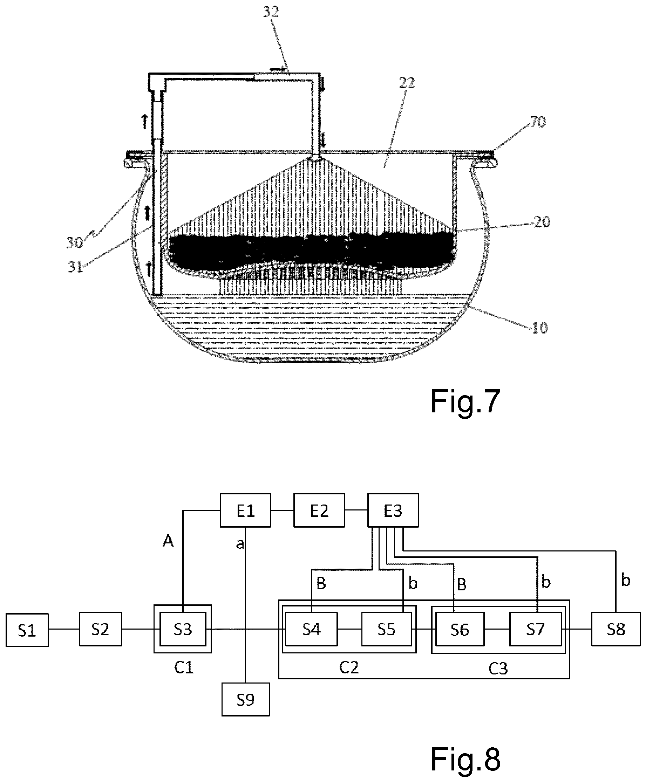

As shown in FIG. 8, the present invention provides a method for cooking rice using an electric cooker, wherein different steps and elements of the flowchart are represented by following references:

| | |
|---|---|
| S1: Place a certain amount of water into the internal pot | |
| S2: Put in the steamer, and put rice into steamer | |
| S3: Rice washing, water absorption | |
| S4: Water in the internal pot is heated and boiled, and this status is maintained up to the third preset time t3 | |
| S5: Water in the internal pot stops getting heated, and the contents of the pot is held up to the fourth preset time t4 | |
| S6: Water in the internal pot is heated and boiled, and this status is maintained up to the fifth preset time t5 | |
| S7: Water in the internal pot stops getting heated, and the contents of the pot is held up to the sixth preset time t6 | |
| S8: Rice steaming and cooking is completed | |
| S9: Water is heated up to the specified temperature T1, and the status is maintained up to the first preset time t1 | |
| E1: Suction pump | a: Closed |
| E2: PCB | A: Activated |
| E3: Heating means | b: Not powered |
| C1: Maintained to second preset time t2 | B: powered |
| C2: Cycle repeated N1 times | C3: Cycle repeated N2 times |

In this method, the electric cooker can be controlled using the method described in the first specific embodiment, and the method for cooking rice using the electric cooker comprises the following steps: the rice washing step in which water is drawn from internal pot 10 into steamer 20 using the water circulation system to wash the rice contained within steamer 20, and thereafter, the water is directed into internal pot 10; the rice steaming step in which the heating means 80 heats up internal pot 10.

Hence, water is recycled and reused by producing steam to be used for steaming the rice from the water that was used to wash the rice. Additionally by separating the cooking and steaming processes using steamer 20, the starch and sugar contents of the rice are reduced and enter into the rice soup in internal pot 10. This lowers the sugar content of the cooked rice and produces low-GI rice.

Before proceeding with rice washing, a certain amount of rice must be placed within steamer 20, and a certain amount of water must be placed into internal pot 10. The electric cooker then begins to operate at this point, with suction pump 40 being activated to create a water circulation loop within the electric cooker by its suction action on the water in internal pot 10. The circulated water is sprayed out from the nozzle located at the top of internal pot 10 and falls onto the rice contained within steamer 20. This washes the rice from top down and the rice also absorbs water in this process.
Optionally, during the rice washing step, rice washing is sustained up to the second preset time t2, and t2 is at least 180s and at most 2400s.

Further optionally, in the rice washing step, the second preset time t2 is at least 300s and at most 1800s.

It should be noted that a preheating step is performed between said rice washing and rice steaming steps, and said preheating step comprises heating the water in internal pot 10 to a first preset temperature T1 and maintaining this up to a first preset time t1, after which, the operation of the water circulation system is stopped.

Optionally, during the preheating step, the first preset temperature T1 is at least 10°C and at most 100°C, and the first preset time t1 is at least 20s and at most 600s.

Further optionally, the first preset temperature T1 is at least 50°C°C and at most 95°C, and the first preset time t1 is at least 30s and at most 400s.

To improve the taste of the cooked rice and to enhance the performance of the electric cooker, the entire rice steaming step is divided into the preliminary rice steaming stage and the final rice steaming stage according to sequence in time.

It should be noted that during the preliminary rice steaming stage, heating means 80 heats up internal pot 10 to the third preset time t3, after which, heating means 80 stops operating and rice steaming is allowed to continue up to the fourth preset time t4, and the preliminary rice steaming stage is repeated N1 times. Hence, through intermittent heating, this control method ensures that sufficient steam is produced by the rice cooker to keep the rice in a state of high-temperature steaming, and the boiling water will not mix with the foam from the rice milk and is prevented from rising and coming into contact with the rice. The requirements on the third preset time t3 is therefore comparatively stringent. Additionally, water is prevented from overheating and producing excessive amounts of steam that could lead to leakage of water, hence preventing spillage and conserving energy.

Optionally, t3 is at least 3 seconds and at most 130 seconds, t4 is at least 3 seconds and at most 130s, and N1 is at least 2 and at most 100.

Further optionally, N1 is at least 4 and at most 80.

It should be noted that in the final rice steaming stage, as rice steaming progresses, water is constantly evaporated into steam, and the concentration of the rice milk in internal pot 10 increases continuously. Under heating, the rice milk is more prone to emerging from bearing cavity 22 of steamer 20 and coming into contact with the rice. This will affect the moisture content of the rice and compromise the GI reduction effect. Hence, after heating means 80 heats up internal pot 10 to the fifth preset time t5, the operation of heating means 80 must be stopped and this state must be maintained up to the sixth preset time t6 to prevent generation of excessive amounts of steam. Excessive steam can lead to water leakage and the rice milk foam rising and coming into contact with the rice.

Optionally, t5 is at least 3 seconds and at most 130 seconds, t6 is at least 3 seconds and at most 130s, and N2 is at least 2 and at most 100.

Further optionally, N2 is at least 4 and at most 80.

In this specific embodiment, when the electric cooker is in the rice steaming step, the on and off times of heating means 80 need not be entirely regular. This means that the heating duration and stopping duration of heating means 80 can be optimized based on the progress of cooking, such that these durations vary between cycles.

Table 1 shows the specific method used in the rice steaming step of the electric cooker:

**Table 1**

| | Rice steaming step | | | |
|---|---|---|---|---|
| No. of times | Preliminary rice steaming stage | | Final rice steaming stage | |
| | t3 (seconds) | t4 (seconds) | t5 (seconds) | t6 (seconds) |
| 1 | 3 | 13 | 3 | 14 |
| 2 | 62 | 3 | 67 | 3 |
| 3 | 81 | 24 | 86 | 23 |
| 4 | 93 | 44 | 85 | 37 |
| 5 | 92 | 47 | 91 | 53 |
| 6 | 101 | 62 | 105 | 66 |
| 7 | 106 | 63 | 122 | 67 |
| 8 | 118 | 83 | 130 | 83 |
| 9 | 121 | 86 | | |
| 10 | 130 | 92 | | |

Controlling the operation of the electric cooker using the method described above allows the electric cooker to have a simpler structure, and the cooker can produce cooked rice with low GI value, which will increase the level of satisfaction among the users.

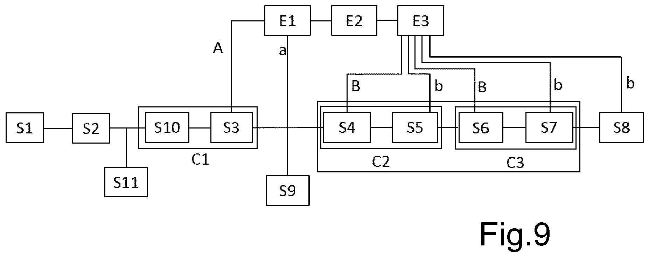

As shown in FIG. 9, the present invention further provides a second method for cooking rice using an electric cooker, wherein different steps and elements of the flowchart are represented by following references:

| | |
|---|---|
| S1: Place a certain amount of water into the internal pot | |
| S2: Put in the steamer, and put rice into steamer | |
| S3: Rice washing, water absorption | |
| S4: Water in the internal pot is heated and boiled, and this status is maintained up to the third preset time t3 | |
| S5: Water in the internal pot stops getting heated, and the contents of the pot is held up to the fourth preset time t4 | |
| S6: Water in the internal pot is heated and boiled, and this status is maintained up to the fifth preset time t5 | |
| S7: Water in the internal pot stops getting heated, and the contents of the pot is held up to the sixth preset time t6 | |
| S8: Rice steaming and cooking is completed | |
| S9: Water is heated up to the specified temperature T1, and the status is maintained up to the first preset time t1 | |
| S10: Water is maintained at a constant temperature T2 | |
| S11: Water is heated up to the second preset temperature T2 | |
| E1: Suction pump | a: Closed |
| E2: PCB | A: Activated |
| E3: Heating means | b: Not powered |
| C1: Maintained to second preset time t2 | B: powered |
| C2: Cycle repeated N1 times | C3: Cycle repeated N2 times |

For this second method, two different treatments that differ in the sequence of the preheating and rice washing steps are provided.

The first treatment comprises: performing a preheating step before rice washing, wherein water in internal pot 10 is heated to a second preset temperature T2, and thereafter, the water circulation system of the rice washing step is activated, and this state is maintained this up to the second preset time t2.

The second type of treatment comprises: heating up the water contained within internal pot 10 using heating means 80 as soon as the rice washing step is activated, and when temperature of the water reaches a second preset temperature T2, the rice washing step continues circulating up to a second preset time t2.

In this way, by using water of a specific temperature to wash the rice and for water absorption, a substantial amount of starch and sugar can be washed away from the rice, and cooked rice with low GI (sugar) is produced.

Optionally, in both treatments described above, during the preheating step, T2 is at least 30°C and at most 95°C, and the second preset time t2 is at least 180s and at most 2400s.

Further optionally, T2 is at least 60°C and at most 80°C, and the second preset time t2 is at least 300s and at most 1800s.

The rice washing step can be followed by the rice steaming step. The rice steaming step in this method is identical to that in the first method, and hence the description will not be repeated here.

## Claims

1. Method for cooking rice with an electric cooker, wherein said electric cooker comprises internal pot (10), heating means (80), steamer (20) housed within said internal pot (10), as well as a water circulation system that is connected with said internal pot (10) and steamer (20), and said heating means (80) heats up said internal pot (10); said method comprises the following steps:
the rice washing step in which water is drawn from said internal pot (10) into said steamer (20) by making use of said water circulation system to wash the rice contained within said steamer (20), and thereafter the water is directed into said internal pot (10);
the rice steaming step in which said heating means (80) heats up said internal pot (10).

2. Method according to Claim 1, wherein a preheating step is performed between said rice washing and rice steaming steps, and said preheating step comprises: heating the water in said internal pot (10) to a first preset temperature T1 and maintaining this up to a first preset time t1, after which, said water circulation system stops operating.

3. Method according to Claim 2, wherein during said rice washing step, rice washing is continued up to a second preset time t2, whereby said second preset time t2 is at least 180s and at most 2400s; and during said preheating step, said first preset temperature T1 is at least 10°C°C and at most 100°C, and said first preset time t1 is at least 20s and at most 600s.

4. Method according to Claim 3, wherein in said second preset time t2 is at least 300s and at most 1800s, said first preset temperature T1 is at least 50°C and at most 95°C, and said first preset time t1 is at least 30s and at most 400s.

5. Method according to Claim 1, wherein a preheating step is carried out before said rice washing step, and said preheating step comprises heating the water in said internal pot (10) to a second preset temperature T2 and then activating the water circulation system of said rice washing step, and maintaining this up to the second preset time t2.

6. Method according to Claim 1, wherein, when said rice washing step is activated, said heating means (80) starts heating up the water contained within said internal pot (10) at the same time, and when temperature of the water reaches a second preset temperature T2, said rice washing step continues circulating up to a second preset time t2.

7. Method according to Claims 5 or 6, wherein said second preset temperature T2 is at least 30°C and at most 95°C, and said second preset time t2 is at least 180s and at most 2400s.

8. Method according to Claim 7, wherein said second preset temperature T2 is at least 60°C and at most 80°C, and said second preset time t2 is at least 300s and at most 1800s.

9. Method according to any of the Claims 1 to 6, wherein the entire rice steaming step is divided into the preliminary rice steaming stage and the final rice steaming stage according to sequence in time, and
in said preliminary rice steaming stage, said heating means (80) heats up said internal pot (10) up to a third preset time t3, after which said heating means (80) stops operating, and rice steaming is continued up to a fourth preset time t4, and this is repeated N1 times;
in said final rice steaming stage, said heating means (80) heats up said internal pot (10) up to a fifth preset time t5, after which said heating means (80) stops operating, and rice steaming is continued up to a sixth preset time t6, and this is repeated N2 times.

10. Method according to Claim 9, wherein said third preset time t3 is at least 3 seconds and at most 130 seconds, said fourth preset time t4 is at least 3 seconds and at most 130 seconds, said fifth preset time t5 is at least 3 seconds and at most 130 seconds, and said sixth preset time t6 is at least 3 seconds and at most 130 seconds; said N1 is at least 2 and at most 100, and said N2 is at least 2 and at most 100.

11. Method according to Claim 10, wherein said N1 is at least 4 and at most 80, and said N2 is at least 4 and at most 80.

## Patentansprüche

1. Verfahren zum Kochen von Reis mit einer elektrischen Garvorrichtung, wobei die elektrische Garvorrichtung einen Innentopf (10), ein Heizelement (80), einen Dampfgarer (20), der in dem Innentopf (10) beherbergt ist, wie auch ein Wasserkreislaufsystem, das mit dem Innentopf (10) und dem Dampfer (20) verbunden ist, umfasst, und das Heizelement (80) den Innentopf (10) aufheizt; das Verfahren umfasst die folgenden Schritte:
den Reiswaschschritt, in dem Wasser von dem Innentopf (10) in den Dampfgarer (20) gesogen wird, indem das Wasserkreislaufsystem verwendet wird, um den Reis zu waschen, der in dem Dampfgarer (20) enthalten ist, und danach das Wasser in den Innentopf (10) geleitet wird;
den Reisdampfgarschritt, in dem das Heizelement (80) den Innentopf (10) erhitzt.

2. Verfahren nach Anspruch 1, wobei ein Vorheizschritt zwischen dem Reiswasch- und Reisdampfgarschritt durchgeführt ist und der Vorheizschritt umfasst: Erhitzen des Wassers in dem Innentopf (10) mit einer ersten voreingestellten Temperatur T1 und Aufrechterhalten dieser bis zu einer ersten voreingestellten Zeit t1, wonach das Wasserkreislaufsystem aufhört zu arbeiten.

3. Verfahren nach Anspruch 2, wobei während des Reiswaschschritts Reiswaschen bis zu einer zweiten voreingestellten Zeit t2 fortgesetzt wird, wobei die voreingestellte Zeit t2 mindestens 180s und höchstens 2400s ist; und während des Vorheizschritts die erste voreingestellte Temperatur T1 mindestens 10°C und höchstens 100°C ist und die erste voreingestellte Zeit t1 mindestens 20s und höchstens 600s ist.

4. Verfahren nach Anspruch 3, wobei die zweite voreingestellte Zeit t2 mindestens 300s und höchstens 1800s ist, die erste voreingestellte Temperatur T1 mindestens 50°C und höchstens 95°C ist und die erste voreingestellte Zeit t1 mindestens 30s und höchstens 400s ist.

5. Verfahren nach Anspruch 1, wobei ein Vorheizschritt vor dem Reiswaschschritt ausgeführt wird und der Vorheizschritt Erhitzen des Wassers in dem Innentopf (10) auf eine zweite voreingestellte Temperatur T2 und dann Aktivieren des Wasserkreislaufsystems des Reiswaschschrittes und Aufrechterhalten dieser bis zu der zweiten voreingestellten Zeit t2 umfasst.

6. Verfahren nach Anspruch 1, wobei, wenn der Reiswaschschritt aktiviert ist, das Heizelement (80) beginnt, gleichzeitig das Wasser zu erhitzen, das in dem Innentopf (10) enthalten ist, und wenn die Wassertemperatur eine zweite voreingestellte Temperatur T2 erreicht, der Reiswaschschritt mit Kreislauf bis zu einer zweiten voreingestellten Zeit t2 fortfährt.

7. Verfahren nach Anspruch 5 oder 6, wobei die zweite voreingestellte Temperatur T2 mindestens 30°C und höchstens 95°C ist und die zweite voreingestellte Zeit t2 mindestens 180s und höchstens 2400s ist.

8. Verfahren nach Anspruch 7, wobei die zweite voreingestellte Temperatur T2 mindestens 60°C und höchstens 80°C ist und die zweite voreingestellte Zeit t2 mindestens 300s und höchstens 1800s ist.

9. Verfahren nach einem der Ansprüche 1 bis 6, wobei der gesamte Reisdampfgarschritt in die vorangehende Reisdampfgarstufe und die finale Reisdampfgarstufe gemäß Zeitabfolge unterteilt ist, und
in der vorangehenden Reisdampfgarstufe das Heizelement (80) den Innentopf (10) bis zu einer dritten voreingestellten Zeit t3 aufheizt, wonach das Heizelement (80) aufhört zu arbeiten, und Reisdampfgaren bis zu einer vierten voreingestellten Zeit t4 fortgesetzt wird, und dies N1 mal wiederholt wird;
in der finalen Reisdampfgarstufe das Heizelement (80) den Innentopf (10) bis zu einer fünften voreingestellten Zeit t5 aufheizt, wonach das Heizelement (80) aufhört zu arbeiten, und Reisdampfgaren bis zu einer sechsten voreingestellten Zeit t6 fortgesetzt wird, und dies N2 mal wiederholt wird.

10. Verfahren nach Anspruch 9, wobei die dritte voreingestellte Zeit t3 mindestens 3 Sekunden und höchstens 130 Sekunden ist, die vierte voreingestellte Zeit t4 mindestens 3 Sekunden und höchstens 130 Sekunden ist, die Fünfte voreingestellte Zeit t5 mindestens 3 Sekunden und höchstens 130 Sekunden ist und die sechste voreingestellte Zeit t6 mindestens 3 Sekunden und höchstens 130 Sekunden ist; das N1 mindestens 2 und höchstens 100 ist und das N2 mindestens 2 und höchstens 100 ist.

11. Verfahren nach Anspruch 10, wobei das N1 mindestens 4 und höchstens 80 ist und das N2 mindestens 4 und höchstens 80 ist.

## Revendications

1. Procédé de cuisson du riz avec un cuiseur électrique, dans lequel ledit cuiseur électrique comprend une cuve interne (10), un moyen de chauffage (80), un cuiseur à vapeur (20) logé dans ladite cuve interne (10), ainsi qu'un système de circulation d'eau qui est raccordé à ladite cuve interne (10) et audit cuiseur à vapeur (20), et ledit moyen de chauffage (80) chauffe ladite cuve interne (10) ; ledit procédé comprend les étapes suivantes :
l'étape de lavage du riz dans laquelle de l'eau est retirée de ladite cuve interne (10) dans ledit cuiseur à vapeur (20) en faisant usage dudit système de circulation d'eau pour laver le riz contenu dans ledit cuiseur à vapeur (20), et après l'eau est dirigée dans ladite cuve interne (10) ;
l'étape de cuisson à la vapeur du riz dans laquelle ledit moyen de chauffage (80) chauffe ladite cuve interne (10).

2. Procédé selon la revendication 1, dans lequel une étape de préchauffage est réalisée entre lesdites étapes de lavage du riz et de cuisson à la vapeur du riz, et ladite étape de préchauffage comprend : le chauffage de l'eau dans ladite cuve interne (10) à une première température prédéfinie T1 et son maintien jusqu'à un premier temps prédéfini t1, après quoi ledit système de circulation d'eau arrête de fonctionner.

3. Procédé selon la revendication 2, dans lequel pendant ladite étape de lavage du riz, le lavage du riz est continué jusqu'à un second temps présent t2, moyennant quoi ledit deuxième temps prédéfini t2 est d'au moins 180 s et d'au plus 2 400 s ; et pendant ladite étape de préchauffage, ladite première température prédéfinie T1 est d'au moins 10 °C et d'au plus 100 °C et ledit premier temps prédéfini t1 est d'au moins 20 s et d'au plus 600 s.

4. Procédé selon la revendication 3, dans lequel dans ledit second temps présent t2 est d'au moins 300 s et d'au plus 1800 s, ladite première température prédéfinie T1 est d'au moins 50 °C et d'au plus 95 °C, et ledit premier temps prédéfini t1 est d'au moins 30 s et d'au plus 400 s.

5. Procédé selon la revendication 1, dans lequel une étape de préchauffage est réalisée avant ladite étape de lavage du riz, et ladite étape de préchauffage comprend le chauffage de l'eau dans ladite cuve interne (10) à une seconde température prédéfinie T2 et ensuite l'activation du système de circulation d'eau de ladite étape de lavage du riz, et son maintien jusqu'au deuxième temps prédéfini t2.

6. Procédé selon la revendication 1, dans lequel lorsque ladite étape de lavage du riz est activée, ledit moyen de chauffage (80) commence le chauffage de l'eau contenue dans ladite cuve interne (10) en même temps, et lorsque la température de l'eau atteint une seconde température prédéfinie T2, ladite étape de lavage du riz continue la circulation jusqu'à un deuxième temps prédéfini t2.

7. Procédé selon la revendication 5 ou 6, dans lequel ladite seconde température prédéfinie T2 est d'au moins 30 °C et d'au plus 95 °C, et ledit deuxième temps prédéfini t2 est d'au moins 180 s et d'au plus 2 400 s.

8. Procédé selon la revendication 7, dans lequel ladite seconde température prédéfinie T2 est d'au moins 60 °C et d'au plus 80°C, et ledit deuxième temps prédéfini t2 est d'au moins 300 s et d'au plus 1800 s.

9. Procédé selon l'une quelconque des revendications 1 à 6, dans lequel l'étape de cuisson à la vapeur du riz entière est divisée en étape de cuisson à la vapeur du riz préliminaire et en étape de cuisson à la vapeur du riz finale selon la séquence de temps, et
dans ladite étape de cuisson à la vapeur du riz préliminaire, ledit moyen de chauffage (80) chauffe ladite cuve interne (10) jusqu'à un troisième temps prédéfini t3, après quoi ledit moyen de chauffage (80) arrête de fonctionner, et la cuisson à la vapeur du riz est continuée jusqu'à un quatrième temps présent t4, et cela est répété N1 fois ;
dans ladite étape de cuisson à la vapeur du riz finale, ledit moyen de chauffage (80) chauffe ladite cuve interne (10) jusqu'à un cinquième temps prédéfini t5, après quoi ledit moyen de chauffage (80) arrête de fonctionner, et la cuisson à la vapeur du riz est continuée jusqu'à un sixième temps prédéfini t6, et cela est répété N2 fois.

10. Procédé selon la revendication 9, dans lequel ledit troisième temps prédéfini t3 est d'au moins 3 secondes et d'au plus 130 secondes, ledit quatrième temps prédéfini t4 est d'au moins 3 secondes et d'au plus 130 secondes, ledit cinquième temps prédéfini t5 est d'au moins 3 secondes et d'au plus 130 secondes, et ledit sixième temps prédéfini t6 est d'au moins 3 secondes et d'au plus 130 secondes ; ledit N1 est d'au moins 2 et d'au plus 100, et ledit N2 est d'au moins 2 et d'au plus 100.

11. Procédé selon la revendication 10, dans lequel ledit N1 est d'au moins 4 et d'au plus 80, et ledit N2 est d'au moins 4 et d'au plus 80.
